# EUROPEAN PATENT APPLICATION

(11) **EP 1 530 006 A2**
(43) Date of publication of application: **11.05.2005**
(21) Application number: 04077997.7
(22) Date of filing: 01.11.2004
(51) Int. Cl.: F24C 15/32, A21B 1/26, A21B 3/04, A21B 1/42, A21B 1/48

(54) **Convection oven with exchangeable energy supply**

(30) Priority: 04.11.2003 IT MI20032119
(71) Applicant: OEM - Ali S.p.A, 20123 Milan (IT)
(72) Inventor: Berti, Luciano Achille Luigi, 20060 Bussero (Milan) (IT)
(74) Representative: De Gregori, Antonella

(57) **Abstract**

A ventilated oven with convertible energy supply for food products, composed of a cooking chamber (12) equipped in the lower part with a feeder and/or cooking plate (13) for said food products, a heat source that supplies the heat inside the cooking chamber, (12) a motorised fan (15) positioned in proximity to a rear wall (20) of the cooking chamber (12) as well as diffuser elements (16) for hot air, made to circulate by a motorised fan (15) and extended in the cooking chamber (12) over and below said cooking plate (13) as well as centring and housing elements (22,39,34) for stable positioning and easy removal of said heat source that supplies the heat (14,100) inside said cooking chamber (12) wherein said heat source comprises an electrical energy supply (14) or a gas energy supply (100). The gas energy supply (100) can easily be exchanged with the electrical energy supply (14) and the other way round, depending on the current user requirements.

## Description

The present invention relates to a ventilated oven for food products with convertible energy supply. A ventilated oven for the cooking and/or heating of food products, in particular for pizza and possibly other oven-baked products, such as pastry and rotisserie products, composed of a cooking chamber equipped with a heat source, with means for hot air circulation, in particular, axial or centrifugal fans, as well as air diffusion elements for collecting the air in proximity to the motorised fan and for distributing said air in the cooking chamber through funnel-shaped or conical holes.

A ventilated oven can be composed of a tunnel type wherein one feeder plate for the products to be cooked is composed of a conveyor in a material such as a metal grid that crosses the cooking chamber.

Alternatively, the ventilated oven cooking chamber can, on the contrary, be closed and equipped with a fixed cooking plate underneath, for example, a plate in refractory material.

Ventilated ovens currently on the market are supplied by gas or electricity. The supply system, whether gas or electrical, influences the oven structure radically.

Ventilated gas or electric ovens therefore have an external appearance and size that are considerably different, and the apparatus inside the cooking chamber is also quite different. These also require specific parameter adjustment.

Oven manufacturers need to produce ventilated gas ovens separately from ventilated electrical ovens, organising completely distinct production lines, and in any case, must use specific components for each type of oven. Furthermore, all spare parts for said ovens are basically different and cannot be interchangeable, thus increasing occupied stock space considerably.

When buying ventilated ovens, in choosing between a gas and an electric oven, buyers limit themselves permanently to the use of that type of energy source. If other necessities arise later on, they are forced to replace the oven.

A further problem with ventilated ovens that has not yet been resolved satisfactorily, concerns the homogenous diffusion of the heat inside the cooking chamber, which has a negative influence on the quality of the cooked product as well as on the oven's energy yield.

A further problem with ventilated ovens and in particular with ventilated tunnel type ovens, is the heat loss towards the exterior following the metal grid conveyor action that enters and exits from the cooking chamber, and the hot air that exits from the conveyor entrance and exit openings.

The aim of the present invention is to provide a ventilated oven for food products with a convertible energy supply that can be converted into an electrically run or gas run oven rapidly and by replacing a limited number of components.

The aim of the present invention is to provide a convertible ventilated oven for food products that supplies optimal heat distribution inside the cooking chamber.

A further aim is to provide a ventilated oven that is highly efficient, and easy to transport and install.

These aims are achieved according to the present invention by providing a ventilated and convertible energy supply oven for food products as described in the independent claims.

Further characteristics are defined in the dependent claims.

The characteristics and advantages of a ventilated and convertible energy supply oven for food products according to the present invention will be made more clear in the following description, provided as an example but by no means limitative, with reference to the appended schematic drawings wherein:
Figure 1 shows views in perspective of a ventilated oven for food products with convertible energy supply, object of the present invention;
Figure 2 shows views in perspective of certain details of the cooking chamber of the oven in figure 1, partially disassembled;
Figure 3 is a blow-up view in perspective of a diffuser element;
Figures 4 and 5 show a view in perspective of a partial cross-section of the rear side of the ventilated oven with convertible energy supply, as shown in figures 1 and 2, wherein an electrically supplied heat source and a gas supplied heat source have been respectively applied;
Figure 6 is a view in perspective of an embodiment of a gas supplied heat source for a ventilated oven according to the present invention.

In reference to said figures, the convertible energy supply, ventilated oven for food products, in particular a tunnel type oven is identified throughout with reference numeral 10, and also comprises a cooking chamber 12 crossed in its lower part by a conveyor feeder and cooking plate 13 for food products, a source that supplies heat to the interior of the cooking chamber 12, a motorised centrifugal fan 15, arranged in a lateral position to the cooking chamber 12, as well as air diffusion elements 16 inside the cooking chamber 12.

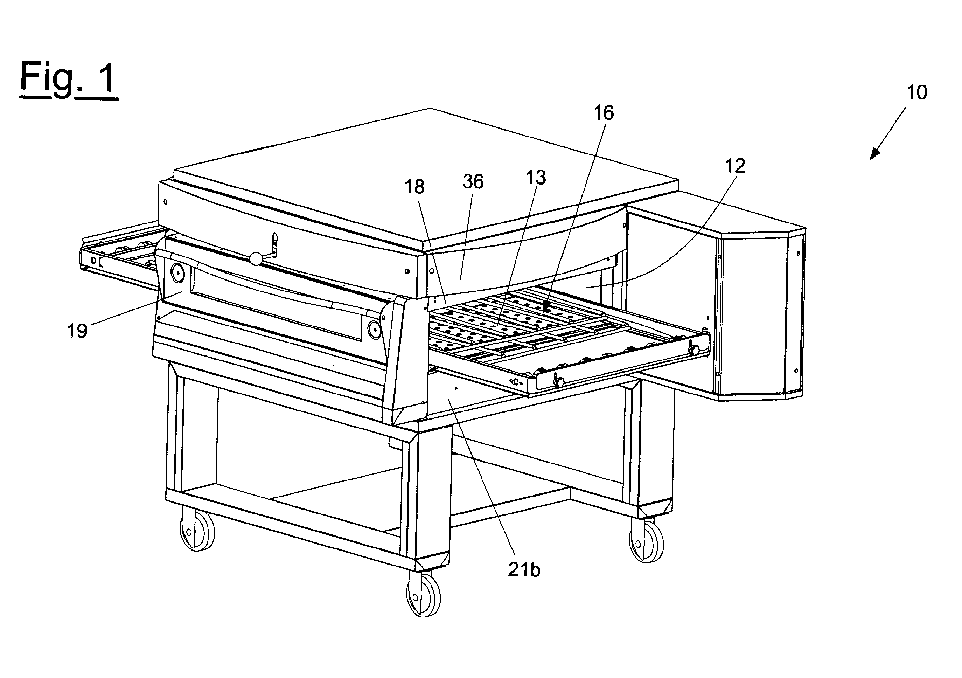

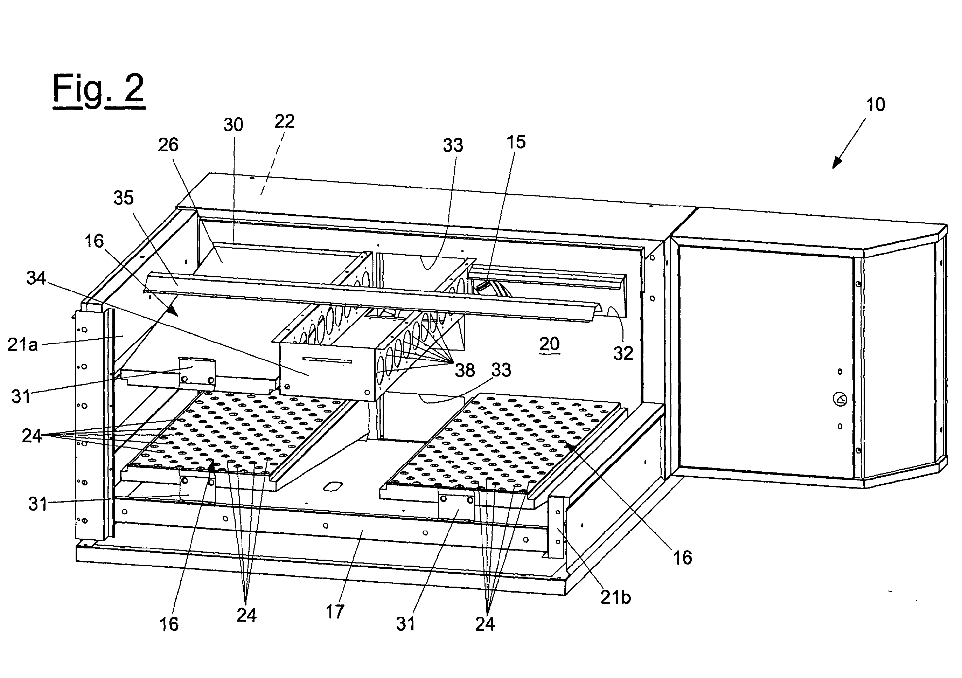

The tunnel type ventilated oven shown in figure 1, and as a partial cross-section in figure 2, is equipped with a grid type conveyor that also acts as a cooking plate 13.

The cooking chamber 12 of the oven 10 comprises lower 17 and upper 18 walls, a front wall 19 that can possibly be opened, a rear wall 20, and side walls 21a, 21b, open in order to introduce the products arranged on the conveyor 13. The side walls 21a and 21b can also possibly have walls that can be adjusted in height to modify the size of the openings and reduce heat dispersion.

The rear wall 20 is equipped with a plurality of openings or holes adapted to act as communication between the cooking chamber 12 and a secondary chamber 22, in which the motorised centrifugal fan 15 is housed, together with the heat source.

The openings in the rear wall 20 create a supply and return route for the hot air. In fact the diffuser elements 16 are connected to the rear wall 20 at the first rectangular openings 23 which have a complementary size to the section of the diffusers 16 and which extend into the cooking chamber 12 over and beneath the cooking plate 13 as far as the front wall 19, to form the hot air supply route.

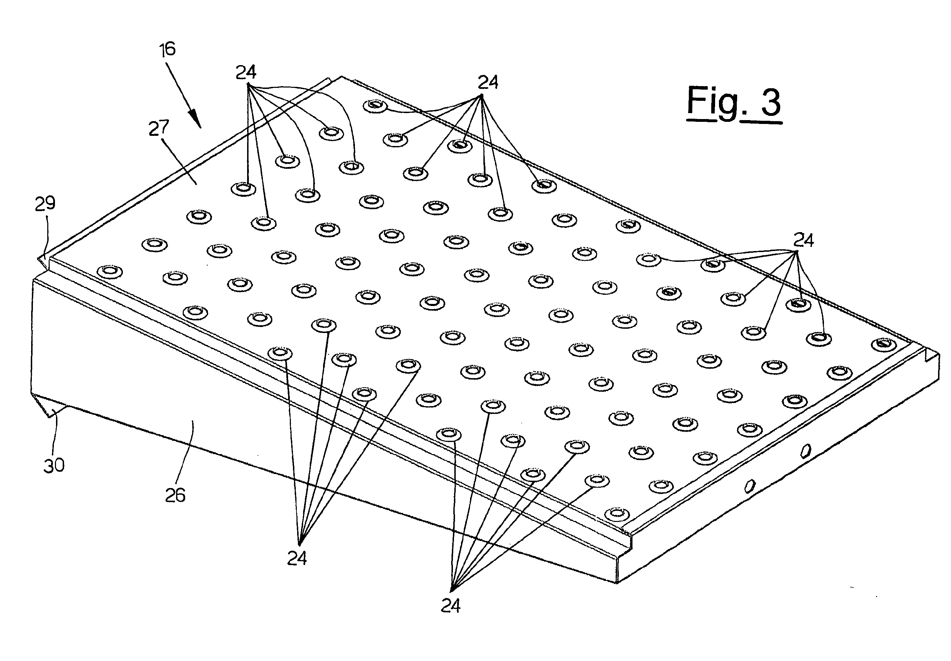

The diffuser elements 16 are composed of a hollow box-like body having a decreasing internal section 26 and a panel 27 perforated with a plurality of conical or funnel-shaped holes 24 for air distribution in chamber 12, as shown in the blow-up detail in figure 3.

The diffuser elements 16 are applied in the cooking chamber 12 using a rapid click-on/release system. Each diffuser element 16 is equipped with two fins bent towards the exterior along the larger edges facing the openings 23 respectively. A first fin 29 in proximity to panel 27 is engaged in the opening 23 of the rear wall 20, while a second fin 30 is pressure forced elastically against the upper wall 18 and the lower wall 17 of the cooking chamber 12 during diffuser 16 assembly.

At the opposite end, the diffuser element 16 is maintained in position by a flexible fixing element 31 attached to the front wall 19 of the cooking chamber 12. Using said fixing element 31, it is possible to easily slide the diffuser element 16 in and out without the need for any particular tools.

The diffuser elements can be removed easily by personnel when cleaning the oven or when replacing them with diffuser elements with differently distributed, or differently sized holes 24, or for other reasons, in order to create different heat distribution inside the cooking chamber 12.

The air sent into the cooking chamber is re-conveyed back to the secondary chamber 22 through further openings in the rear wall 20. In particular this refers to two openings 33, one upper and one lower, positioned between the openings 23 for the diffuser elements 16. Said further openings 33, connect a perforated compartment 34 to the secondary chamber 22, and extend from the rear wall 20 through to the front wall 19 of the cooking chamber 12 as shown in figure 2.

The holes 38, that in the figure are represented as an example on the side walls of compartment 34, provide a means of communication between the cooking chamber 12 with the interior of compartment 34, and therefore with the secondary chamber 22, in this manner creating a return route for the hot air towards the motorised fan 15.

Moreover, a pipe 35 is inserted into the perforated compartment 34, to recover the hot air in proximity to the side walls 21a and 21b, equipped externally with a collector plate or hood 36, and/or possibly holes (not shown), for the extraction of the air into pipe 35.

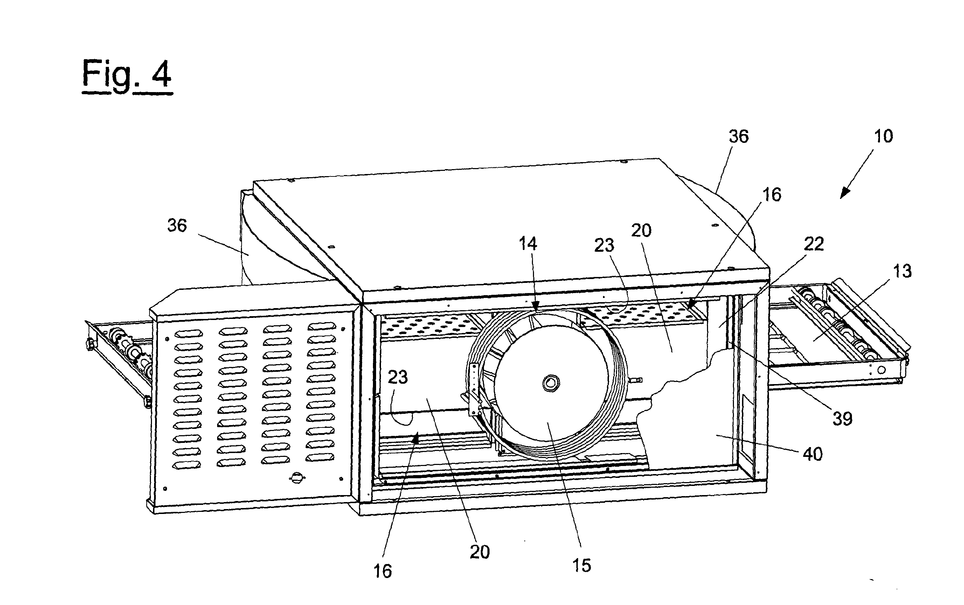

Figure 4 shows the rear side of a ventilated oven 10 according to the present invention, with a partial cross-section of a rear panel 40. An electrically supplied heat source 14 is housed in the secondary chamber 22 positioned to surround motorised fan 15.

The rear panel 40 on which are applied the motorised fan 15 and the heat source 14, is positioned on the rear side of the oven, in particular in a centring structure 39, or frame. Together with the frame 39, the panel 40 that closes the secondary chamber 22, provides the centring position of the electric resistor 14 and the motorised fan 15 in relation to the oven.

The electrically supplied heat source 14 comprises at least one electric resistor arranged to surround the circumference of the motorised fan 15.

In a preferred method applied to the ventilated oven according to the present invention, the fan speed adjustment is associated with the resistor capacity adjustment that can be regulated by degrees or in continuous mode. Therefore each time the resistor power is increased, this is associated with an increase in motorised fan speed.

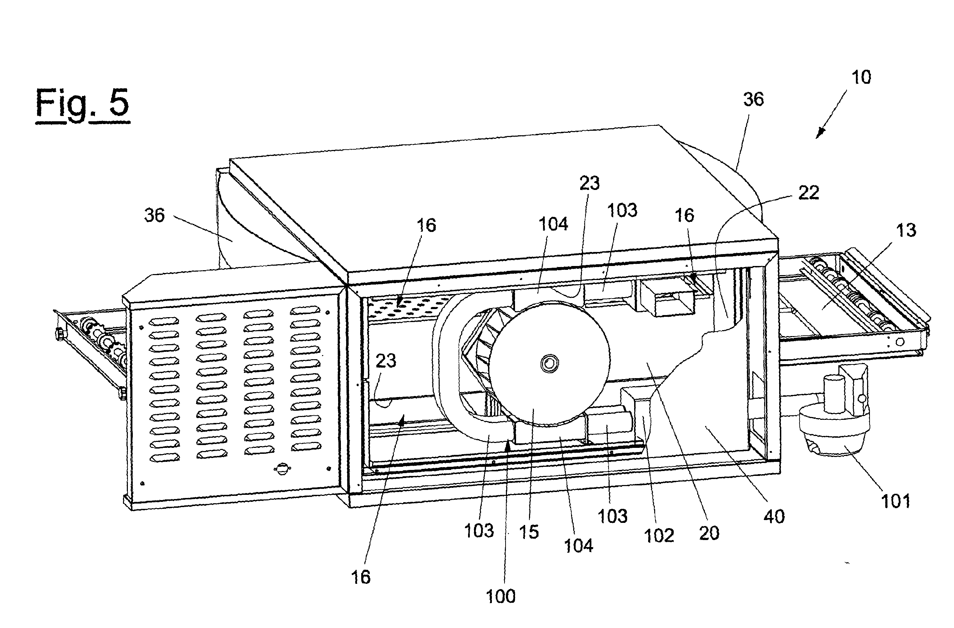

Figure 5 shows a ventilated convertible energy supply oven 10 according to the present invention, with a partial cross section of the rear panel 40.

A gas supplied heat source is housed in the secondary chamber 22, comprising a heat exchanger 100 connected to a gas burner. Said heat exchanger 100 constructed hermetically sealed, is positioned to partially surround the motorised fan 15, which is applied to the rear panel 40 that closes the secondary chamber 22, and is partially positioned inside the cooking chamber 12.

Panel 40 is positioned on the centring structure 39 of the oven to close the secondary chamber 22 and to provide the centred position of the motorised fan 15 in relation to the heat exchanger 100.

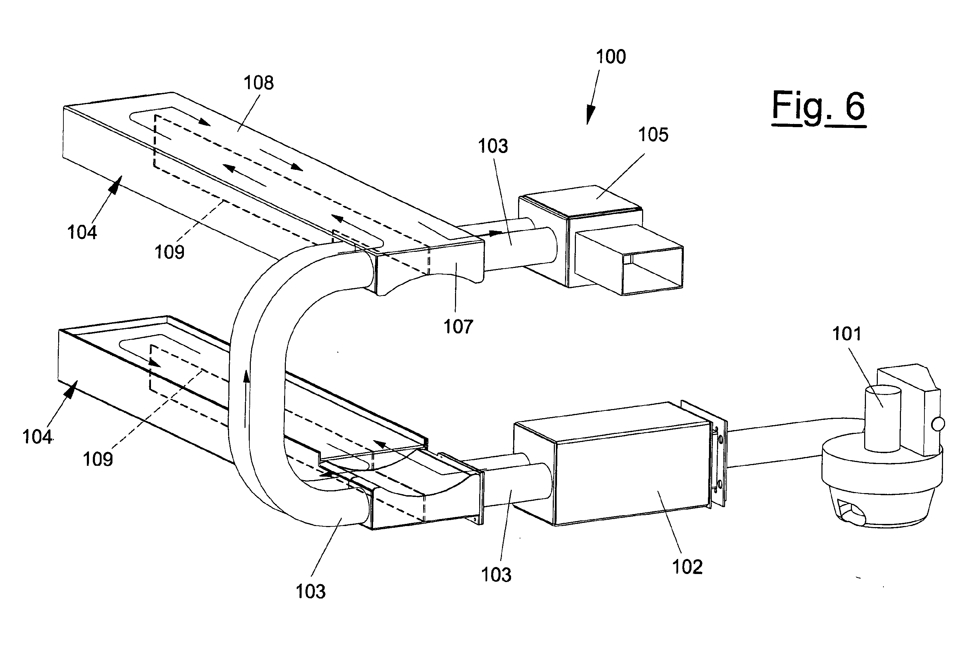

In a first embodiment shown in perspective in figure 6, the heat exchanger 100 comprises a combustion chamber 102, inserted at one end with the burner 101 and at the opposite end with the pipe 103 composed of at least one tubular element, arranged on a plane perpendicular to the motorised fan 15 axis connecting two radiating bodies 104 both to the combustion chamber 102, and comprising an upper and lower body that extend in a perpendicular manner from the pipe 103 in a direction parallel to the motorised fan axis 15, for transversal insertion into the cooking chamber 12 of the ventilated oven 10.

Figure 6 shows the pipe 103 comprising for example, two circular section pipes positioned adjacent to each other, but which could be replaced by a single pipe with a rectangular section for example.

Lastly, pipe 103 is inserted into a fume collector chamber 105 that conveys the fumes to a flue (not shown).

The radiating bodies 104 shown in a preferred embodiment in figure 6 comprise a first portion 107 having a concave surface on the side facing the motorised fan 15 to reduce the height volume of the heat exchanger 100. A second portion 108 of the radiating body 104 has a parallelepiped form adapted for insertion into the hollow compartment 34 that extends from the rear wall 20 of oven 10 to the front wall 19, and equipped with holes 38 for the recovery of the hot air from the cooking chamber 12.

The radiation bodies 104 are divided internally by a dividing panel or partition 109, extending between the first portion 107 of the said body and a considerable part of the second portion 108 that divides the body 104 into two communicating channels in proximity to the end to form a forced "U-shaped" route for the fumes, as shown schematically by the arrows in figure 6.

The high temperature combustion fumes pass through the radiating bodies 104 towards the cooking chamber 12, heating the air and through radiation, also contributing to the cooking of the food products with the circulation of the air.

Moreover, in the ventilated convertible energy supply oven 10 object of the present invention, the radiating bodies 104 are inserted inside the compartments 34 through which the hot air from the cooking chamber 12 is recovered and reconveyed to the motorised centrifugal fan 15. On the return route the air that surrounds the radiating bodies 104 at a very high temperature, extracts heat from the fumes, thus heating the air. Therefore the motorised centrifugal fan 15 sends air at an already high temperature into the cooking chamber 12, increasing the oven performance considerably.

Further embodiments of the heat exchanger, not illustrated, provide for the presence of a single radiation body, preferably the lower body, or different routes followed by pipes 103 between the combustion chamber 102 and the radiation bodies 104.

The heat exchangers described as an example can be based on different types of heating and cooking of the food products with different temperature ratios between the upper wall and the bedplate, and are easily interchangeable with each other to adapt the oven to the type of product to be cooked. In fact that they are inserted in a manner so that they are easily removable inside the cooking chamber, and in particular are centred in relation to the perforated compartments 34 extending into the cooking chamber 12 and in relation to the centring structure 39 on the rear side of the oven. Furthermore the heat exchangers are removable in order to convert the oven to an electrical version.

Moreover, the ventilated convertible energy supply oven according to the present invention is equipped with a basic control program and dedicated boards for separate cooking program control for electrically supplied or gas supplied ovens. In fact, for the two different function modes, the cooking parameters, such as the heat source capacity and the motorised fan speed must be optimised in different ways.

The function mode selection, whether electric or gas, can be activated by the user, for example by means of a switch on the exterior of the oven.

A further embodiment, (not shown) of a ventilated convertible energy supply oven object of the present invention, could be equipped with a closed cooking chamber comprising a fixed cooking plate in lower position.

The main advantage of the ventilated convertible energy supply oven for food products according to the present invention, comprises the possibility of installation of a heat source supplied by either electricity or gas, while maintaining the overall oven structure as well as its electronic control system unchanged.

The installation or replacement of the different heat sources is advantageously possible in a very short time.

A further advantage of the ventilated oven with convertible energy supply for food products object of the present invention consists in the circulation of hot air in the cooking chamber that reaches every zone of the chamber in a uniform manner, and is advantageously recovered to minimize thermal dispersion.

Moreover during the return route towards the motorised fan, the air is advantageously recalled from a hot zone, thus increasing the oven yield and consequently increasing energy saving.

Another advantage of the ventilated oven according to this invention is the rapid click-on/release action of the diffuser elements.

The ventilated oven for food products and the heat exchanger for said oven according to this invention, conceived in this manner can be subject to numerous modifications and variants, while remaining within the concept of the invention; moreover all details can be replaced with technically equivalent elements. In particular the materials employed, and their dimensions can be of any type according to technical requirements.

## Claims

1. A ventilated oven with convertible energy supply for food products, composed of a cooking chamber (12) equipped in the lower part with a feeder and/or cooking plate (13) for said food products, a source that supplies the heat inside the cooking chamber, (12) a motorised fan (15) positioned in proximity to a rear wall (20) of the cooking chamber (12) as well as diffuser elements (16) for hot air, made to circulate by a motorised fan (15) and extended in the cooking chamber (12) over and below said cooking plate (13) **characterised in that** it comprises centring and housing elements (22, 39, 34) for stable positioning and easy removal of said source that supplies the heat (14, 100) inside said oven (10), said source comprising an electrical energy supply (14) or a gas energy supply (100).

2. Oven according to claim 1, **characterised in that** said electrical source comprises at least one electric resistor (14) positioned around said motorised fan (15), said resistor (14) being fixed to a rear panel (40) adapted to be positioned on a centring structure (39) or frame on the rear panel of the oven.

3. Oven according to claim 1, **characterised in that** said gas supplied source comprises a heat exchanger (100) connected to a burner (101 wherein said heat exchanger (100) comprises at least one pipe (103) for the hot combustion fumes, and at least one radiating body (104) positioned cross-wise in the cooking chamber (12) and engaged on said pipe (103), said heat exchanger (100) being inserted in a manner in order to be easily removed from the interior of said oven (10).

4. Oven according to claim 3, **characterised in that** said heat exchanger (100) is partially positioned around the motorised fan (15) inside a secondary chamber (22) in proximity to the rear wall (20) of the cooking chamber (12), and partially positioned inside a perforated housing structure (34) protruding into the cooking chamber (12), said housing structure comprising a compartment (34) perforated with holes (38) to recover the hot air from the cooking chamber (12) and to convey it to said secondary chamber (22).

5. Oven according to claim 3, **characterised in that** said heat exchanger (100) comprises a combustion chamber (102) inserted at one end into said burner (101) and at the opposite end into at least one radiating body (104), as well as an exhaust fume collector chamber (105) adapted to convey said fumes to a flue.

6. Oven according to claim 3, **characterised in that** said radiating body (104) basically having a parallelepiped shape contains a separating panel or partition (109) to divide the body (104) into two channels in communication in proximity to the opposite end of the pipe (103) to form a forced route for the fumes.

7. A ventilated oven for food products, composed of a cooking chamber (12) equipped in the lower part with a feeder and/or cooking plate (13) for said food products, a source that supplies the heat inside the cooking chamber (12) a motorised fan (15) positioned in proximity to a rear wall (20) of the cooking chamber (12) as well as diffuser elements (16) for hot air, made to circulate by a motorised fan (15) and extended in the cooking chamber (12) over and below said cooking plate (13) **characterised in that** said air diffuser elements (16) are box-like hollow bodies perforated with a plurality of openings (24) distributed on the surfaces respectively facing the said cooking plate (13) and connected to said rear wall (20) of the cooking chamber (12) through a rapid click-on/release system.

8. Oven according to claim 7, **characterised in that** said click-on/release system comprises an elastic fixing element (31) attached to the front wall (19) adapted to engage with said diffuser (16), and two fins (29, 30) bent towards the exterior respectively along the main edges of said diffuser elements (16), a first fin (29) being adapted to engage in an opening (23) of said rear wall (20) and a second fin (30) being adapted to be pressed against said upper (18) and lower (17) walls of the cooking chamber (12) during assembly.

9. A ventilated oven for food products, composed of a cooking chamber (12) equipped in the lower part with a feeder and/or cooking plate (13) for said food products, a source that supplies the heat inside the cooking chamber, (12) a motorised fan (15) positioned in proximity to a rear wall (20) of the cooking chamber (12) as well as diffuser elements (16) for hot air, made to circulate by a motorised fan (15) and extended in the cooking chamber (12) over and below said cooking plate (13) **characterised in that** it is equipped with a pipe (35) for recovering the hot air in proximity of the side walls (21a and 21b) of said cooking chamber (12) and conveying the air towards a secondary chamber (22) containing said motorised fan (15).
